Europäisches Patentamt

European Patent Office

Office européen des brevets

(11) Publication number: **0 065 851**
**B1**

(12) **EUROPEAN PATENT SPECIFICATION**

(45) Date of publication of patent specification: 25.06.86

(21) Application number: 82302426.0

(22) Date of filing: 12.05.82

(51) Int. Cl.⁴: **A 01 N 57/16** // (A01N57/16, 57:12)

(54) Insecticidal synergistic mixtures of O,O-diethyl O-(3,5,6-trichloro-2-pyridinyl)phosphorothioate and O,O-dimethyl-S-(N-methylcarbamoylmethyl)phosphorothioate and method of killing and controlling insects.

(30) Priority: 14.05.81 US 263638

(43) Date of publication of application:
01.12.82 Bulletin 82/48

(45) Publication of the grant of the patent:
25.06.86 Bulletin 86/26

(84) Designated Contracting States:
DE FR GB IT

(56) References cited:

"The pesticide manual, a world compendium",
Ed. C.R. WORTHING, 6th edition, 1979, BCPC
Publications, pages 119,392, Croydon, G.B.

(73) Proprietor: THE DOW CHEMICAL COMPANY
2030 Dow Center Abbott Road P.O. Box 1967
Midland, MI 48640 (US)

(72) Inventor: Larson, Larry Leverne
1732 South 153rd Avenue Circle
Omaha Nebraska 68144 (US)

(74) Representative: Allard, Susan Joyce et al
BOULT, WADE & TENNANT 27 Furnival street
London EC4A 1PQ (GB)

Courier Press, Leamington Spa, England.

**0 065 851**

## Description

The present invention is directed to new insecticidal compositions which are useful in the kill and control of insects particularly insects of the Lepidoptera order and especially of the genera Heliothis, Spodoptera and Laspeyresia. These compositions comprise mixtures of O,O-diethyl O-(3,5,6-tri-chloro-2-pyridinyl)-phosphorothioate and O,O-dimethyl-S-(N-methylcarbamoylmethyl)phosphorothioate. It has been found that the toxic ingredients of the said compositions are mutually activating.

The new insecticidal composition of the present invention comprises a mixture of (A) O,O-diethyl O-(3,5,6-trichloro-2-pyridinyl)phosphorothioate and (B) O,O-dimethyl-S-(N-methylcarbamoylmethyl)phos-phorothioate in a ratio of A:B of 2:1 to 1:128.

These insecticidal compositions are especially effective in killing and controlling insects, particularly Lepidoptera, especially Heliothis, Spodoptera and Laspeyresia species, which infest crops such as corn, soybeans, tobacco and particularly cotton.

The mixtures of active compounds of the present invention have been found to possess good activity against Heliothis, Spodoptera and Laspeyresia species. Accordingly, the present invention also comprises methods for controlling such insects and/or their habitats with a pesticidally effective amount of the active compound mixture. For such uses the unmodified active materials of the present invention can be employed. However, the present invention embraces the use of an insecticidally-effective amount of the active materials in admixture with an inert material, as an adjuvant or carrier therefor, in solid or liquid form. Thus, for example, the active mixture can be dispersed on a finely divided solid and employed therein as a dust. Also, the active mixture, as liquid concentrates or solid compositions comprising the active mixture, can be dispersed in water, typically with the aid of a wetting agent, and the resulting aqueous dispersion employed as a spray. In other procedures, the active mixture can be employed as a constituent of organic liquid compositions, oil-in-water and water-in-oil emulsions, or water dispersions, with or without the addition of wetting, dispersing, or emulsifying agents.

Suitable adjuvants of the foregoing type are well known to those skilled in the art. The methods of applying the solid or liquid pesticidal formulations similarly are well known to the skilled artisan.

As organic solvents used as extending agents there can be employed hydrocarbons, e.g. benzene, toluene, xylene, kerosene, diesel fuel, fuel oil, and petroleum naphtha, ketones such as acetone, methyl ethyl ketone and cyclohexanone, chlorinated hydrocarbons such as carbon tetrachloride, chloroform, trichloroethylene, and perchloroethylene, esters such as ethyl acetate, amyl acetate and butyl acetate, ethers, e.g., ethylene glycol monomethyl ether and diethylene glycol monomethyl ether, alcohols, e.g., methanol, ethanol, isopropanol, amyl alcohol, ethylene glycol, propylene glycol, butyl carbitol acetate and glycerine. Mixtures of water and organic solvents, either as solutions or emulsions, can be employed.

The active mixtures can also be applied as aerosols, e.g., by dispersing them in air by means of a compressed gas such as dichlorodifluoromethane or trichlorofluoromethane and other such materials.

The active mixture of the present invention can also be applied with adjuvants or carriers such as talc, pyrophyllite, synthetic fine silica, attapulgus clay, kieselguhr, chalk, diatomaceous earth, lime, calcium carbonate, bentonite, fuller's earth, cottonseed hulls, wheat fluor, soybean flour, pumice, tripoli, wood flour, walnut shell flour, redwood flour and lignin.

As stated it is frequently desirable to incorporate a surface active agent in the compositions of the present invention. Such surface active or wetting agents are advantageously employed in both the solid and liquid compositions. The surface active agent can be anionic, cationic or nonionic in character.

Typical classes of surface active agents include alkyl sulfonate salts, alkylaryl sulfonate salts, alkylaryl polyether alcohols, fatty acid esters of polyhydric alcohols and the alkylene oxide addition products of such esters, and addition products of long chain mercaptans and alkylene oxides. Typical examples of such surface active agents include the sodium alkylbenzene sulfonates having 10 to 18 carbon atoms in the alkyl group, alkylphenol ethylene oxide condensation products, e.g., p-isoctylphenol condensed with 10 ethylene oxide units, soaps, e.g., sodium stearate and potassium oleate, sodium salt of propylnaphthalene sulfonic acid, di(2-ethylhexyl)-ester of sodium sulfosuccinic acid, sodium lauryl sulfate, sodium decane sulfonate, sodium salt of the sulfonated monoglyceride of coconut fatty acids, sorbitan sesquioleate, lauryl trimethyl ammonium chloride, octadecyl trimethyl ammonium chloride, polyethylene glycol lauryl ether, polyethylene glycol esters of fatty acids and rosin acids, e.g., Ethofat 7 and 13, sodium N-methyl-N-oleyl taurate, Turkey Red Oil, sodium dibutyl naphthalene sulfonate, sodium lignin sulfonate, polyethylene glycol stearate, sodium dodecylbenzene sulfonate tertiary dodecyl polyethylene glycol thioether (nonionic 218), long chain ethylene oxide-propylene oxide condensation products, e.g., Pluronic 61 (molecular weight 1000), polyethylene glycol ester of tall oil acids, sodium octyl phenoxyethoxyethyl sulfate, tris(polyoxyethylene)-sorbitan monostearate (Tween® 60), and sodium dihexyl sulfosuccinate. (Ethofat and Pluronic are Registered Trade Marks).

The concentration of the active mixtures in liquid formulations generally is from 0.01 to 95 percent by weight. Concentrations of from 0.1 to 50 weight percent are often employed. In formulations to be employed as concentrates, the active materials can be present in a concentration of from 5 to 98 weight percent. In dusts or dry formulations, the concentration of the active ingredient can be from 0.01 to 95 weight percent or more; concentrations of from 0.1 to 50 weight percent are often conveniently employed.

2

The active compositions can also contain other compatible additaments, for example, plant growth regulants pesticides and the like.

The present compositions can be applied by the use of power-dusters, boom and hand sprayers, spray-dusters and by other conventional means. The compositions can also be applied from airplanes as a dust or a spray.

The active mixtures of this invention are usually applied at an approximate rate of from 0.07 to 5.6 kg/hectare, but lower or higher rates may be appropriate in some cases. A preferred application rate is from 0.56 to 2.24 kg/hectare.

The following examples further illustrate the present invention. In the examples, all parts are by weight unless otherwise indicated.

Example I

A study was conducted to determine the effectiveness and synergistic response of various combinations of O,O-diethyl o-(3,5,6-trichloro-2-pyridinyl)phosphorothioate and O,O-dimethyl-S-(N-methylcarbamoylmethyl)-phosphorothioate in the control of Heliothis insects.

Test solutions were prepared by admixing predetermined amounts of each of the above compounds in predetermined amounts of water containing predetermined amounts of acetone and Triton® X155 surfactant.

Tobacco leaf discs, 3 inches (7.62 cm) in diameter were dipped into one of the above mixtures and placed in an open petri dish to dry. After the leaf discs were dry, 5 late second instar (approximately 3-day old) tobacco bud worms (*Heliothis virescens*) were placed in each dish and the dishes covered. All treatments were run in triplicate and on two different days. Mortality was recorded 48 hours after treatment with moribund larvae unable to crawl their own body length being counted as dead. In this test method, intoxication occurred through contact with and feeding upon treated plants.

The results of this study are set forth below in Table I.

TABLE I

| Test No.[1] | Chemical[2] | Amount in ppm | Chemical[3] | Amount in ppm | Ratio of A to B | Expected control in percent[4] | Actual control in percent | Percent increase over expected control[5] |
|---|---|---|---|---|---|---|---|---|
| 1 | — | — | — | — | — | — | 0 | — |
| 2 | A | 12.5 | — | — | — | — | 7 | — |
| 3 | A | 25 | — | — | — | — | 13 | — |
| 4 | A | 50 | — | — | — | — | 43 | — |
| 5 | A | 100 | — | — | — | — | 73 | — |
| 6 | — | — | B | 50 | — | — | 0 | — |
| 7 | — | — | B | 100 | — | — | 0 | — |
| 8 | — | — | B | 200 | — | — | 7 | — |
| 9 | — | — | B | 400 | — | — | 10 | — |
| 10 | — | — | B | 800 | — | — | 33 | — |
| 11 | A | 12.5 | B | 50 | 1:4 | 7 | 10 | 43 |
| 12 | A | 12.5 | B | 100 | 1:8 | 7 | 10 | 43 |
| 13 | A | 12.5 | B | 200 | 1:16 | 14 | 20 | 43 |
| 14 | A | 12.5 | B | 400 | 1:32 | 16 | 20 | 25 |
| 15 | A | 25 | B | 50 | 1:2 | 13 | 23 | 77 |
| 16 | A | 25 | B | 100 | 1:4 | 13 | 20 | 54 |
| 17 | A | 25 | B | 200 | 1:8 | 19 | 30 | 58 |
| 18 | A | 25 | B | 400 | 1:16 | 22 | 27 | 35 |
| 19 | A | 25 | B | 800 | 1:32 | 42 | 40 | 0 |
| 20 | A | 50 | B | 50 | 1:1 | 43 | 37 | 0 |

TABLE I (contd.)

| Test No.[1] | Chemical[2] | Amount in ppm | Chemical[3] | Amount in ppm | Ratio of A to B | Expected control in percent[4] | Actual control in percent | Percent increase over expected control[5] |
|---|---|---|---|---|---|---|---|---|
| 21 | A | 50 | B | 100 | 1:2 | 43 | 33 | 0 |
| 22 | A | 50 | B | 200 | 1:4 | 47 | 57 | 21 |
| 23 | A | 50 | B | 400 | 1:8 | 49 | 37 | 0 |
| 24 | A | 50 | B | 800 | 1:16 | 62 | 50 | 0 |
| 25 | A | 100 | B | 50 | 2:1 | 73 | 80 | 10 |
| 26 | A | 100 | B | 100 | 1:1 | 73 | 83 | 13 |
| 27 | A | 100 | B | 200 | 1:2 | 75 | 83 | 11 |
| 28 | A | 100 | B | 400 | 1:4 | 76 | 80 | 5 |
| 29 | A | 100 | B | 800 | 1:8 | 82 | 77 | 0 |

[1] Test Nos. 1—10 are control runs with Test 1 being a no chemical control (surfactant/acetone/water alone).

[2] Chemical A represents O,O-diethyl O-(3,5,6-trichloro-2-pyridinyl)-phosphorothioate.

[3] Chemical B represents O,O-dimethyl-S-(N-methylcarbamoylmethyl)-phosphorothioate.

[4] Expected control=% control by chemical A+% control by chemical B minus (−)

$$\frac{\% \text{ control by chemical A} \times \% \text{ control chemical B}}{100}$$

[5] Percent increase over expected control equals

$$\frac{\text{actual control}}{\text{expected control}} \times 100 - 100$$

Example II

A study was conducted to determine the effectiveness and synergistic response of various combinations of O,O-diethyl O-(3,5,6-trichloro-2-pyridinyl)phosphorothioate and O,O-dimethyl-S-(N-methylcarbamoylmethyl)phosphorothioate in the control of Spodoptera insects.

Test solutions were prepared by admixing predetermined amounts of each of the above compounds in predetermined amounts of water containing predetermined amounts of acetone and Triton® X155 surfactant.

Tobacco leaf discs, 3 inches (7.62 cm) in diameter were dipped into one of the above mixtures and placed in an open petri dish to dry. After the leaf discs were dry, 5 late second instar (approximately 3-day old) beet armyworm larvae (*Spodoptera exigua*) were placed in each dish and the dishes covered. All treatments were run in triplicate and on two different days. Mortality was recorded 48 hours after treatment with moribund larvae unable to crawl their own body length being counted as dead. In this test method, intoxication occurred through contact with and feeding upon treated plants.

The results of this study are set forth below in Table II.

TABLE II

| Test No.[1] | Chemical[2] | Amount in ppm | Chemical[3] | Amount in ppm | Ratio of A to B | Expected control in percent[4] | Actual control in percent | Percent increase over expected control[5] |
|---|---|---|---|---|---|---|---|---|
| 1 | — | — | — | — | — | — | 0 | — |
| 2 | A | 3.1 | — | — | — | — | 7 | — |
| 3 | A | 6.2 | — | — | — | — | 30 | — |
| 4 | A | 12.5 | — | — | — | — | 80 | — |
| 5 | A | 25 | — | — | — | — | 87 | — |
| 6 | — | — | B | 25 | — | — | 0 | — |
| 7 | — | — | B | 50 | — | — | 0 | — |
| 8 | — | — | B | 100 | — | — | 0 | — |
| 9 | — | — | B | 200 | — | — | 0 | — |
| 10 | — | — | B | 400 | — | — | 7 | — |
| 11 | A | 3.1 | B | 25 | 1:8 | 7 | 33 | 371 |
| 12 | A | 3.1 | B | 50 | 1:16 | 7 | 10 | 42 |
| 13 | A | 3.1 | B | 100 | 1:32 | 7 | 23 | 228 |
| 14 | A | 3.1 | B | 200 | 1:64 | 7 | 30 | 328 |
| 15 | A | 3.1 | B | 400 | 1:128 | 14 | 30 | 114 |
| 16 | A | 6.2 | B | 25 | 1:4 | 30 | 50 | 67 |
| 17 | A | 6.2 | B | 50 | 1:8 | 30 | 60 | 100 |
| 18 | A | 6.2 | B | 100 | 1:16 | 30 | 57 | 90 |

TABLE II (Continued)

| Test No.[1] | Chemical[2] | Amount in ppm | Chemical[3] | Amount in ppm | Ratio of A to B | Expected control in percent[4] | Actual control in percent | Percent increase over expected control[5] |
|---|---|---|---|---|---|---|---|---|
| 19 | A | 6.2 | B | 200 | 1:32 | 30 | 73 | 143 |
| 20 | A | 6.2 | B | 400 | 1:64 | 35 | 53 | 51 |
| 21 | A | 12.5 | B | 25 | 1:2 | 80 | 90 | 13 |
| 22 | A | 12.5 | B | 50 | 1:4 | 80 | 87 | 9 |
| 23 | A | 12.5 | B | 100 | 1:8 | 80 | 100 | 25 |
| 24 | A | 12.5 | B | 200 | 1:16 | 80 | 97 | 21 |
| 25 | A | 12.5 | B | 400 | 1:32 | 81 | 93 | 15 |
| 26 | A | 25 | B | 25 | 1:1 | 87 | 100 | 15 |
| 27 | A | 25 | B | 50 | 1:2 | 87 | 100 | 15 |
| 28 | A | 25 | B | 100 | 1:4 | 87 | 100 | 15 |
| 29 | A | 25 | B | 200 | 1:8 | 87 | 100 | 15 |
| 30 | A | 25 | B | 400 | 1:16 | 88 | 100 | 14 |

[1] Test Nos. 1—10 are control runs with Test 1 being a no chemical control (surfactant/acetone/water alone).

[2] Chemical A represents O,O-diethyl O-(3,5,6-trichloro-2-pyridinyl)-phosphorothioate.

[3] Chemical B represents O,O-dimethyl-S-(N-methylcarbamoylmethyl)-phosphorothioate.

[4] Expected control=% control by chemical A+% control by chemical B minus (−)

$$\frac{\% \text{ control by chemical A} \times \% \text{ control chemical B}}{100}$$

[5] Percent increase over expected control equals

$$\frac{\text{actual control}}{\text{expected control}} \times 100 - 100$$

Example III

A study was conducted to determine the effectiveness and synergistic response of various combinations of O,O-diethyl O-(3,5,6-trichloro-2-pyridinyl)phosphorothioate and O,O-dimethyl-S-(N-methylcarbamoylmethyl)phosphorothioate in the control of Laspeyresia insects.

Test solutions were prepared by admixing predetermined amounts of each of the above compounds in predetermined amounts of water containing predetermined amounts of acetone and Triton® X155 surfactant.

At the same time, a water/surfactant mixture containing none of the compounds was also prepared to serve as a control. Sheets containing egg masses of codling moths (*Laspeyresia pomonella*) are pinned to apples and the egg sheets and apples are drenched with an aqueous dispersion of one of the hereinafter set forth compounds. Separate egg masses on apples were also treated with the control mixture. The egg masses/apples were incubated under conditions conducive to the hatching of the eggs and the growth of the larvae therefrom. Ten days after treatment, the apples were examined for the presence of larvae. Counts of the number of larvae penetration in the treated fruit were compared to the number present in the control to determine the present control obtained with the test compounds.

The results of this examination are set forth below in Table III.

0 065 851

TABLE III

| Test No.[1] | Chemical[2] | Amount in ppm | Chemical[3] | Amount in ppm | Ratio of A to B | Expected control in percent[4] | Actual control in percent | Percent increase over expected control[5] |
|---|---|---|---|---|---|---|---|---|
| 1 | — | — | — | — | — | — | 0 | — |
| 2 | A | 3.1 | — | — | — | — | 13 | — |
| 3 | A | 6.2 | — | — | — | — | 25 | — |
| 4 | A | 12.5 | — | — | — | — | 47 | — |
| 5 | A | 25 | — | — | — | — | 70 | — |
| 6 | — | — | B | 25 | — | — | 14 | — |
| 7 | — | — | B | 50 | — | — | 26 | — |
| 8 | — | — | B | 100 | — | — | 37 | — |
| 9 | — | — | B | 200 | — | — | 48 | — |
| 10 | — | — | B | 400 | — | — | 54 | — |
| 11 | A | 3.1 | B | 25 | 1:8 | 25 | 27 | 8 |
| 12 | A | 3.1 | B | 50 | 1:16 | 36 | 38 | 5 |
| 13 | A | 3.1 | B | 100 | 1:32 | 45 | 58 | 29 |
| 14 | A | 3.1 | B | 200 | 1:64 | 55 | 56 | 2 |
| 15 | A | 3.1 | B | 400 | 1:128 | 60 | 72 | 20 |
| 16 | A | 6.2 | B | 25 | 1:4 | 36 | 38 | 6 |
| 17 | A | 6.2 | B | 50 | 1:8 | 45 | 64 | 42 |
| 18 | A | 6.2 | B | 100 | 1:16 | 53 | 55 | 4 |
| 19 | A | 6.2 | B | 200 | 1:32 | 61 | 75 | 23 |
| 20 | A | 6.2 | B | 400 | 1:64 | 66 | 75 | 14 |

TABLE III (Continued)

| Test No.[1] | Chemical[2] | Amount in ppm | Chemical[3] | Amount in ppm | Ratio of A to B | Expected control in percent[4] | Actual control in percent | Percent increase over expected control[5] |
|---|---|---|---|---|---|---|---|---|
| 21 | A | 12.5 | B | 25 | 1:2 | 54 | 62 | 15 |
| 22 | A | 12.5 | B | 50 | 1:4 | 61 | 56 | 0 |
| 23 | A | 12.5 | B | 100 | 1:8 | 67 | 57 | 0 |
| 24 | A | 12.5 | B | 200 | 1:16 | 72 | 80 | 11 |
| 25 | A | 12.5 | B | 400 | 1:32 | 76 | 85 | 12 |
| 26 | A | 25 | B | 25 | 1:1 | 74 | 77 | 4 |
| 27 | A | 25 | B | 50 | 1:2 | 78 | 77 | 0 |
| 28 | A | 25 | B | 100 | 1:4 | 81 | 64 | 0 |
| 29 | A | 25 | B | 200 | 1:8 | 84 | 85 | 1 |
| 30 | A | 25 | B | 400 | 1:16 | 86 | 90 | 5 |

[1] Test Nos. 1—10 are control runs with Test 1 being a no chemical control (surfactant/acetone/water alone).

[2] Chemical A represents O,O-diethyl O-(3,5,6-trichloro-2-pyridinyl)-phosphorothioate.

[3] Chemical B represents O,O-dimethyl-S-(N-methylcarbamoylmethyl)phosphorothioate.

[4] Expected control=% control by chemical A+% control by chemical B minus (−)

$$\frac{\% \text{ control by chemical A} \times \% \text{ control chemical B}}{100}$$

[5] Percent increase over expected control equals

$$\frac{\text{actual control}}{\text{expected control}} \times 100 - 100$$

Data from Tables I, II and III illustrates that better control was obtained employing the two toxicants together than would be expected from the results obtained from employing each of the two toxicants alone. These data are obtained according to the technique described in Colby, "Calculating synergistic and Antagonistic Responses of Herbicide Combinations", Weeds, Vol. 15 (1967) pages 20—22 and Colby, "Greenhouse Evaluation of Herbicide Combinations", Proc. NEWCC, No. 19, pages 312—320.

### Claims

1. A synergistic insecticidal composition which comrises a mixture of (A) O,O-diethyl O-(3,5,6-tri-chloro-2-pyridinyl)phosphorothioate and (B) O,O-dimethyl-S-(N-methylcarbamoylmethyl)phosphoro-thioate in a ratio of A:B of 2:1 to 1:128.

2. A composition as claimed in Claim 1 which includes an inert carrier.

3. A composition as claimed in Claim 2 wherein the carrier is an inert liquid carrier.

4. A composition as claimed in Claim 2 or Claim 3 wherein the mixture of toxicants is present in an amount of from 0.01 to 95 percent by weight of the total composition.

5. A composition as claimed in Claim 2 or Claim 3 wherein the composition is present as an aqueous dispersion and the mixture of toxicants is present in an amount of from 0.1 to 50 percent by weight of the total composition.

6. A method for killing and controlling insects which comprises contacting the insects or their habitat with an insecticidally-effective amount of a composition as claimed in any one of the preceding claims.

7. A method as claimed in Claim 6 wherein the insects are of the genus Heliothis.

8. A method as claimed in Claim 6 wherein the insects are of the genus Spodoptera.

9. A method as claimed in Claim 6 wherein the insects are of the genus Laspeyresia.

10. A method as claimed in any one of Claims 6 to 9 wherein the composition is employed in an amount of from 0.07 to 5.6 kg/hectare.

### Patentansprüche

1. Eine synergistische insektizide Zusammensetzung, die eine Mischung aus (A) O,O-Diethyl O-(3,5,6-Trichloro-2-pyridinyl)-phosphorothioat und (B) O,O-Dimethyl-S-(N-methylcarbamoyl-methyl)-phosphorothioat im Verhältnis von A:B von 2:1 bis 1:128 umfaßt.

2. Eine Zusammensetzung nach Anspruch 1, dadurch gekennzeichnet, daß sie ein inertes Trägermaterial enthält.

3. Eine Zusammensetzung nach Anspruch 2, dadurch gekennzeichnet, daß das Trägermaterial ein inertes flüssiges Trägermaterial ist.

4. Eine Zusammensetzung nach Anspruch 2 oder 3, bei welcher die Mischung der Giftstoffe in einer Menge von 0,01 bis 95 Gew.-% der gesamten Zusammensetzung vorliegt.

5. Eine Zusammensetzung nach Anspruch 2 oder 3, in welcher die Zusammensetzung als wäßrige Dispersion vorliegt und die Mischung der Giftstoffe in einer Menge von 0,1 bis 50 Gew.-% der gesamten Zusammensetzung vorliegt.

6. Ein Verfahren zum Abtöten und zur Kontrolle von Insekten, welches das Inkontaktbringen der Insekten oder ihres Lebensraumes mit einer insektizid wirksamen Menge der Zusammensetzung nach einem der vorhergehenden Ansprüche umfaßt.

7. Ein Verfahren nach Anspruch 6, bei welchem es sich um Insekten der Gattung Heliothis handelt.

8. Ein Verfahren nach Anspruch 6, bei welchem es sich um Insekten der Gattung Spodoptera handelt.

9. Ein Verfahren nach Anspruch 6, bei welchem es sich um Insekten der Gattung Laspeyresia handelt.

10. Ein Verfahren nach einem der Ansprüche 6 bis 9, in welchem die Zusammensetzung in einer Menge von 0,07 bis 5,6 kg/ha angewendet wird.

### Revendications

1. Composition insecticide synergique, qui comprend un mélange de (A) O-(3,5,6-trichloro-2-pyridinyl)-thiophosphate de O,O-diéthyle et (B) S-(N-méthylcarbamoylméthyl)-thio-phosphate de O,O-diméthyle dans un rapport A:B de 2:1 à 1:128.

2. Composition selon la revendication 1, qui contient un véhicule inerte.

3. Composition selon la revendication 2, dans laquelle le véhicule est un véhicule liquide inerte.

4. Composition selon la revendication 2 ou 3, dans laquelle le mélange des agents toxiques est présent à raison de 0,01 à 95% par rapport au poids de la composition totale.

5. Composition selon la revendication 2 ou 3, dans laquelle la composition est présente sous forme d'une dispersion aqueuse et le mélange d'agents toxiques est présent à raison de 0,1 à 50% par rapport au poids de la composition totale.

6. Procédé pour tuer et détruire des insectes, qui consiste à mettre en contact les insectes ou leur habitat avec une proportion efficace, du point de vue insecticide, d'une composition selon l'une quelconque des revendications précédentes.

7. Procédé selon la revendication 6, dans lequel les insectes sont du gente Heliothis.

8. Procédé selon la revendication 6, dans lequel les insectes sont du genre Spodoptera.

9. Procédé selon la revendication 6, dans lequel les insectes sont du genre Laspeyresia.

10. Procédé selon l'une quelconque des revendications 6 à 9, dans lequel on utilise la composition à raison de 0,07 à 5,6 kg/hectare.